Europäisches Patentamt

European Patent Office

Office européen des brevets

(19)

(11) Numéro de publication: **0 191 953**

**A1**

(12) ## DEMANDE DE BREVET EUROPEEN

(21) Numéro de dépôt: **85200209.6**

(51) Int. Cl.⁴: **B 23 P 11/00**

(22) Date de dépôt: **19.02.85**

(43) Date de publication de la demande:
**27.08.86 Bulletin 86/35**

(84) Etats contractants désignés:
**AT BE CH DE FR GB IT LI LU NL SE**

(71) Demandeur: **ATELIERS DE CONSTRUCTIONS ELECTRIQUES DE CHARLEROI (ACEC) Société Anonyme Avenue Lloyd George 7 B-1050 Bruxelles(BE)**

(72) Inventeur: **Coumans, Xavier 59 Rue du Manoir B-5544 Agimont(BE)**

(54) **Procédé de fixation d'une jante a la périphérie d'un élément mobile en rotation et dispositif appliquant ce procédé.**

(57) Dans ce procédé, la fixation d'une jante rigide (47) sur un élément mobile en rotation (40) présentant un certain nombre d'éléments radiaux (42,43,44,45) se fait en interposant une ceinture déformable (46) dimensionnée pour que le rapprochement obtenu entre la ceinture déformable (46) et les éléments radiaux (42,43,44,45) à l'aide de moyens de fixation connus de la ceinture (46) sur les éléments radiaux (42, 43, 44,45) entraîne une déformation en lobbes de la ceinture et donne naissance à des zones de compression entre la ceinture déformable (46) et la jante rigide (47) qui assurent le calage de l'un par rapport à l'autre.

La transmission du couple est assurée par des cales (57,58,59,60).

Fig. 6

EP 0 191 953 A1

0191953

# PROCEDE DE FIXATION D'UNE JANTE A LA PERIPHERIE D'UN ELEMENT MOBILE EN ROTATION ET DISPOSITIF APPLIQUANT CE PROCEDE.

L'invention concerne un procédé de fixation d'une jante rigide à la périphérie d'une pièce tournante, présentant un certain nombre d'éléments radiaux susceptibles de subir une précontrainte de traction, tels que des bras d'un croisillon de rotor d'alternateur ou des pales d'une roue de turbine. L'invention se rapporte également à des dispositifs mettant en oeuvre ce procédé.

Dans ce procédé de fixation, une ceinture métallique déformable, interposée entre la jante rigide et les éléments radiaux, est accrochée aux éléments radiaux qui, soumis à une précontrainte de traction, déforment la ceinture en lobes et créent ainsi des zones de compression entre la ceinture métallique déformable et la jante rigide pour en assurer le calage.

Ce procédé de fixation trouve une première application dans les groupes hydrauliques à roue polaire ou à transmission souple en usage dans les centrales hydro-électriques exploitant les basses chutes.

La technique la plus simple utilisée pour l'exploitation de ces basses chutes consiste à monter des groupes à transmission souple. Chacun de ces groupes est constitué d'une turbine à basse vitesse dont la roue, cerclée d'un anneau fretté servant de poulie, entraîne par courroie un alternateur à haute vitesse.

Pour les groupes à roue polaire dont le rotor de l'alternateur est directement monté en périphérie de la roue de la turbine, le montage le plus fréquemment utilisé, pour éviter le décollement du rotor à vitesse d'emballement, consiste à fretter à chaud le rotor sur la roue de la turbine.

Les précontraintes de compression exercées sur les pales de la roue par le frettage à chaud sont à ce point importantes qu'elles empêchent de rendre les pales orientables réduisant ainsi le rendement de ces groupes à charge partielle.

Pour conserver les pales de la roue de turbine orientables, il est connu d'exercer sur chaque pale de la roue un effort de compression contrôlé à l'aide d'un dispositif complexe disposé dans le moyeu de la roue qui, par rattrapage des jeux radiaux dus aux efforts centrifuges,

15.09/1924.

maintient chaque pale sous une compression déterminée. Cette technique complexe et couteuse ne peut guère s'appliquer qu'aux groupes hydrauliques de tailles importantes.

Le procédé de fixation faisant l'objet de la présente invention trouve une seconde application dans la fixation d'une jante d'alternateur sur un croisillon.

Généralement, la jante d'alternateur constituée de tôles feuilletées assemblées par boulons est fixée sur le croisillon par des cales introduites sous la jante au niveau de chaque bras du croisillon. Cette technique de montage impose de calculer les bras du croisillon à la pression critique de flambage, ce qui conduit à munir le croisillon d'un assez grand nombre de bras.

La présente invention a pour but de remédier à ces inconvénients en remplaçant notamment les contraintes exercées sur les éléments radiaux par des tensions de traction au lieu de tensions de compression.

L'invention telle qu'elle est caractérisée dans les revendications résoud le problème en interposant entre la jante rigide et les éléments radiaux une ceinture déformable dimensionnée pour que le rapprochement obtenu entre la ceinture et les éléments radiaux à l'aide des moyens de fixation de la ceinture sur les éléments radiaux entraîne une déformation en lobes de la ceinture et donne naissance à des zones de compression entre la ceinture et la jante rigide qui assurent le calage de l'une par rapport à l'autre.

Un avantage important obtenu par cette invention réside en ce que les éléments radiaux sont déterminés pour travailler en traction au lieu d'être calculés pour résister au flambage suite aux efforts de compression introduits par les montages connus.

Un autre avantage du procédé de montage revendiqué apparait dans le domaine des roues de turbines hydrauliques en permettant l'orientation des pales à l'arrêt comme en fonctionnement. La simplicité de conception et le faible coût de réalisation permettent d'équiper de roues à pales orientables les petites unités hydrauliques exploitant les barrages de dimensions réduites.

Un autre avantage du procédé revendiqué apparait dans les rotors d'alternateurs en permettant de réduire considérablement le nombre de bras du croisillon, d'en simplifier le montage et d'en réduire le coût de fabrication.

L'invention est exposée ci-après plus en détails, à l'aide des figures suivantes :

- La figure 1 montre un schéma simplifié du principe de montage appliqué à une roue de turbine hydraulique

- La figure 2 montre un détail de réalisation d'une première variante d'une ceinture déformable réalisée en plusieurs secteurs

- La figure 3 montre un détail de réalisation d'une seconde variante d'une ceinture déformable réalisée en plusieurs secteurs

- La figure 4 montre un exemple de réalisation pour un groupe hydraulique à transmission souple

- La figure 5 est une coupe perpendiculaire à l'axe de rotation d'une pale orientable

- La figure 6 montre un schéma simplifié du principe de montage appliqué à un rotor d'alternateur

- La figure 7 est une coupe radiale d'un exemple de réalisation d'un rotor d'alternateur.

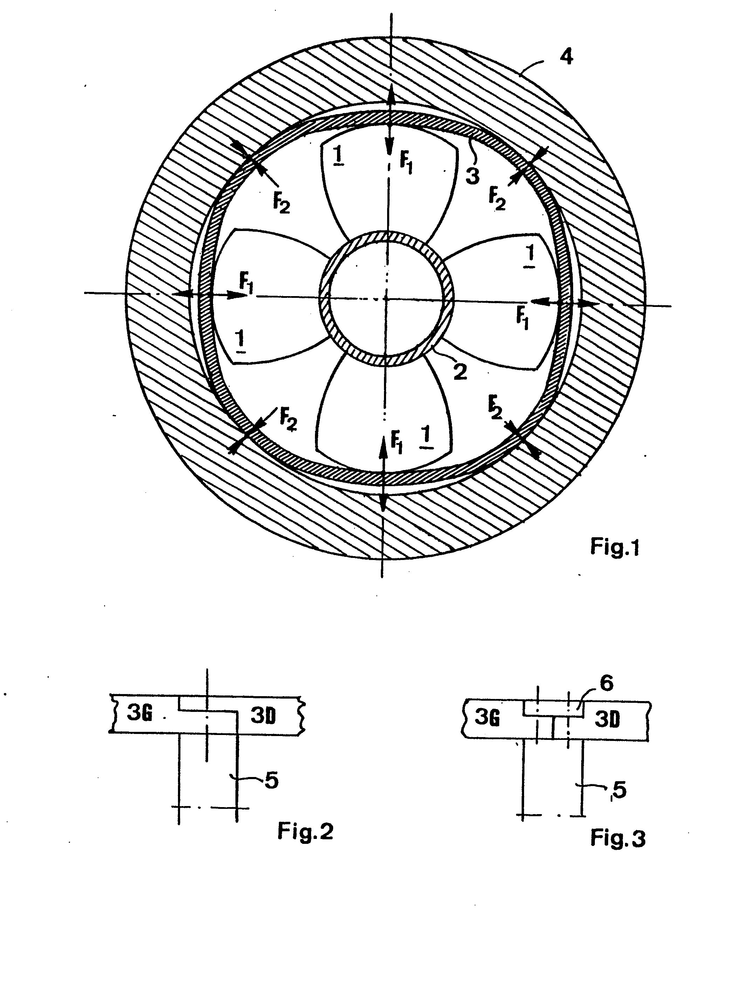

La figure 1 schématise le principe du procédé de fixation, revendiqué dans l'invention, appliqué à une roue de turbine hydraulique R constituée de quatre pales orientables $\underline{1}$ , d'un moyeu 2, d'une ceinture déformable 3 et d'une jante rigide 4.

Le principe du serrage de la ceinture 3 à l'intérieur de la jante 4 est essentiellement basé sur la déformation de la ceinture 3 dont le moment d'inertie est beaucoup plus petit que celui de la jante 4 considérée, en première approximation, comme infiniment rigide.

En l'absence de la jante rigide 4, et suite à l'application au droit de chaque pale d'une force radiale $F_1$ dirigée vers le centre, la ceinture 3 subit une déformation importante présentant un lobe entre chaque pale $\underline{1}$ .

Si on applique ces mêmes forces radiales $F_1$ lorsque la ceinture 3 est placée, sans jeu, à l'intérieur de la jante rigide 4 considérée comme indéformable, la déformation de la ceinture 3 est empêchée et des efforts de compression $F_2$ apparaissent entre la ceinture 3 et la jante rigide 4. Par simplification, considérons les efforts de compression

$F_2$ comme des forces concentrées exerçant leur action à mi-distance des efforts radiaux $F_1$. La valeur des efforts de compression $F_2$ est telle qu'un blocage parfait est assuré entre la ceinture 3 et la jante 4 à l'arrêt.

En fonctionnement, les phénomènes de dilatation sous l'effet de la chaleur et de la force centrifuge doivent être pris en considération. Tout se passe comme si la ceinture 3 était placée, avec un jeu initial plus grand, dans la jante 4 infiniment rigide. L'application de quatre forces radiales $F_1$ déforme librement la ceinture 3 de la valeur de ce jeu initial et ce n'est que lorsque ce jeu initial est repris qu'un effort de compression $F'_2$ apparaît entre la ceinture 3 et la jante 4. Pour un même effort radial $F_1$, l'effort de compression diminue ($F'_2 < F_2$). Toutefois, cette réduction est faible car en rotation, la déformation de la ceinture 3 est beaucoup plus importante que l'augmentation du rayon de la jante 4. Il subsiste donc un reliquat important de serrage.

L'effort de traction exercé sur chaque pale 1 est presque le même à l'arrêt et en rotation et autorise l'utilisation d'un mécanisme de commande, ultérieurement détaillé.

La précontrainte de traction, agissant sur chaque pale 1 , peut être déterminée par un choix approprié entre le moment d'inertie de la ceinture 3 et celui de la jante 4.

Dans une réalisation, non représentée, de l'invention, la ceinture peut être constituée en deux pièces disposées côte à côte sur toute la longueur de la circonférence et maintenues jointives par des moyens de fixation connus.

Dans un autre mode de réalisation, la ceinture déformable 3 peut être réalisée en plusieurs secteurs avec recouvrement aux points d'accrochage des éléments radiaux.

La figure 2 représente une portion de ceinture 3 s'étendant de part et d'autre d'un élément radial 5 et constituée de secteurs contigus respectivement repérés en 3 G et 3 D se recouvrant mutuellement au droit de l'élément radial 5.

La figure 3 représente une portion de ceinture 3 s'étendant de part et d'autre d'un élément radial 5 et constituée de secteurs contigus respectivement repérés en 3 G et 3 D doublé chacun par une pièce de recouvrement 6 s'étendant au droit de l'élément radial 5.

Dans les modes de réalisation présentés aux figures 2 et 3, les éléments radiaux sont mis sous tension de traction à l'aide de vis réparties régulièrement selon la dimension axiale suivant une disposition qui sera détaillée ultérieurement.

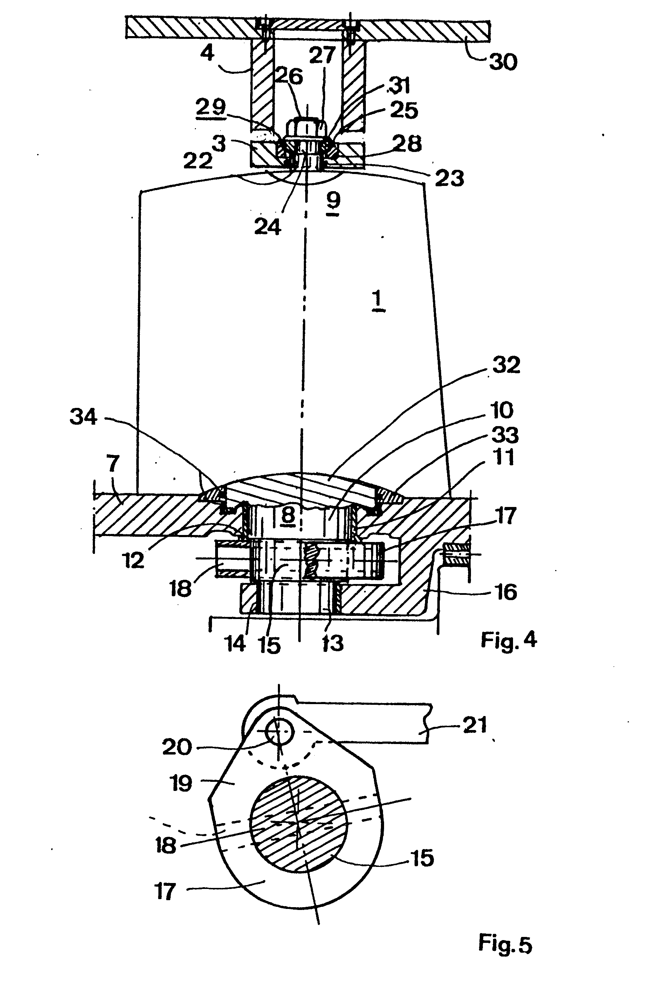

La figure 4 représente une vue en coupe d'une pale 1 montée en rotation, d'une part dans un moyeu 7 à l'aide d'un tourillon intérieur 8, et d'autre part dans une ceinture 3 à l'aide d'un tourillon extérieur 9.

Le tourillon intérieur 8 se compose d'une première fusée 10 tournant dans un palier 11 muni d'un épaulement 12, d'une seconde fusée 13 coaxiale à la première fusée 10 mais d'un diamètre plus petit et tournant dans un palier 14 et d'une partie cylindrique 15 située entre les deux fusées 10 et 13 et usinée à un diamètre intermédiaire. Le palier 11 et son épaulement 12 sont solidaires du moyeu 7. Le palier 14 est inséré dans un étrier 16 en forme de baionnette solidaire du moyeu 7. Sur la partie cylindrique 15 se place un manchon 17, solidarisé à cette partie cylindrique 15 par une broche 18 et comportant un maneton 19 montré en figure 5 dont l'axe 20 permet de collaborer avec une biellette 21. Une face du manchon 17 prend appui sur l'épaulement 12 du palier 11 pour reprendre les efforts centrifuges.

Le tourillon extérieur 9 se compose d'une portée 22 pour un joint d'étanchéité 23 inséré dans la ceinture 3, d'une fusée 24 tournant dans un coussinet 25 en forme de calotte sphérique et d'une extrémité filetée 26 sur laquelle se vise un écrou 27. Le coussinet 25 en forme de calotte sphérique prend appui sur un support alvéolaire 28 inséré dans la ceinture 3 pour former une rotule 29. La ceinture 3 est disposée à l'intérieur d'une jante rigide 4 solidaire d'une poulie 30 pour courroie plate.

Quand on vise l'écrou 27 sur l'extrémité filetée 26 du tourillon extérieur 9, on met la pale 1 sous traction en prenant appui d'une part sur la ceinture 3 par l'intermédiaire d'une rondelle élastique 31 et de la rotule 29, et d'autre part sur le moyeu 7 par l'intermédiaire du manchon 17, solidarisé par la broche 18 au tourillon intérieur 8, et de l'épaulement 12 du coussinet 11.

Pour répartir l'effort de traction, un plateau 32 en forme de calotte sphérique assure le raccord entre la pale 1 et le tourillon interne 8 par une succession de diamètres décroissants. Autour du plateau 32 est disposée une bague 33, faite de plusieurs parties, et servant au maintien des joints d'étanchéité 34.

Dans une autre application de ce procédé de fixation, la jante rigide 4 sert de support à des pôles pour constituer un rotor d'alternateur.

L'ensemble formé par la roue de turbine et le rotor d'alternateur est communément appelé roue polaire.

Ce mode d'assemblage peut donc être utilisé pour la constitution d'une roue polaire dont les pales sont orientables en appliquant le montage montré en figure 4.

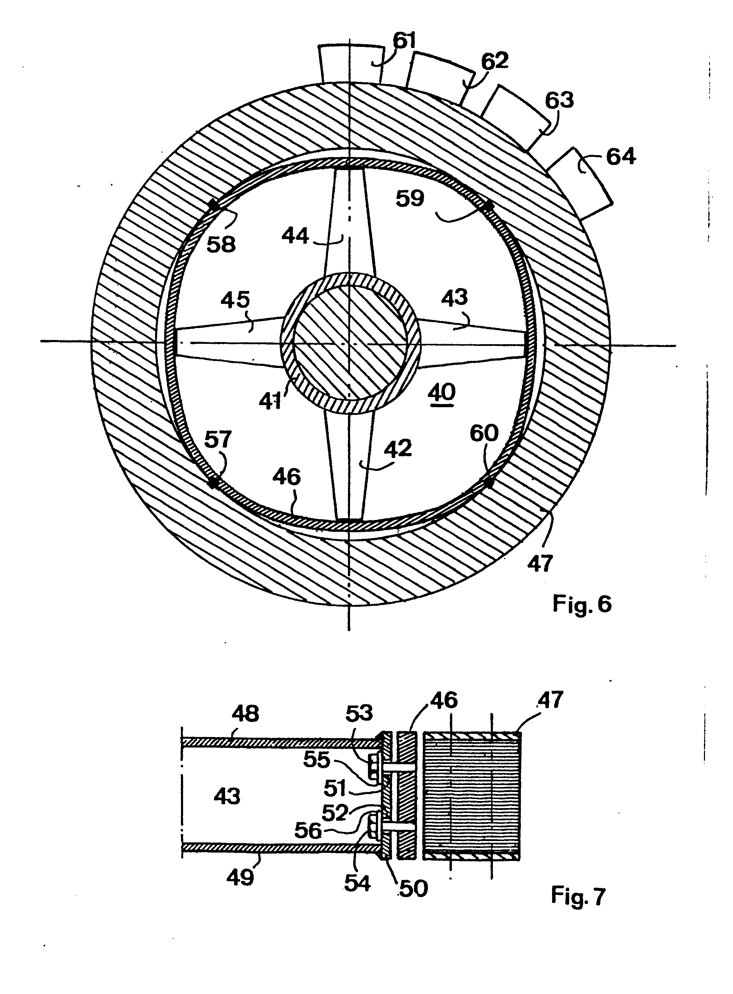

La figure 6 schématise l'application du principe de fixation à un rotor d'alternateur comportant un croisillon 40 constitué d'un moyeu 41 et de quatre bras repérés en 42, 43, 44 et 45. Une ceinture 46, suffisamment mince pour être déformée est disposée autour du croisillon 40, cette ceinture 46 est d'un diamètre intérieur tel qu'elle laisse un jeu de quelques millimètres par rapport au diamètre du croisillon 40. De même le diamètre extérieur de la ceinture 46 laisse un jeu de quelques millimètres par rapport au diamètre intérieur d'une jante rigide 47.

La ceinture 46 est beaucoup plus souple que la jante et est dimensionnée de manière que sa déformation libre, c'est-à-dire en l'absence de la jante rigide 47, sous l'effet des forces de traction appliquées par les bras, soit beaucoup plus grande que la déformation de la jante sous l'effet de la dilatation thermique et des forces centrifuges à l'emballement. Par conséquent l'effort de calage entre la jante rigide 47 et la ceinture 46 varie peu que la machine soit à l'arrêt, en fonctionnement normal ou en survitesse.

Le principe du serrage de la ceinture 46 à l'intérieur de la jante rigide 47 est dû essentiellement à la déformation de la ceinture 46 lorsqu'on fixe celle-ci sur les bras 42, 43, 44 et 45 du croisillon 40.

La figure 7 montre la fixation de la ceinture 46 sur le bras 43 constitué de deux méplats parallèles 48 et 49 de forme tronconique dont les grandes bases sont solidarisées au moyeu 41 et dont les petites bases sont réunies par une entretoise 50 pour former un bras en forme de U.

Dans l'exemple de réalisation montré en figure 7 l'entretoise 50 est percée de trous oblongs 51 et 52 dont la grande dimension s'étend dans le sens circonférentiel et dans lequels s'engagent deux vis 53 et 54 dont les têtes prennent appui sur deux rondelles 55 et 56 et dont les parties filetées s'engagent dans des filets taraudés de la ceinture 46. En visant les deux vis 53 et 54, le rapprochement progressif de la ceinture 46 vers l'entretoise 50 du bras 43 fera naître des tensions de traction dans les méplats parallèles 48 et 49. Pour assurer la reprise du couple entre le bras 43 et la ceinture 46 ; des moyens connus sont utilisés tels que l'insertion d'une broche ou d'une cale longitudinale ou l'application de points de soudure.

En se reportant à nouveau à la figure 6 on constate que la ceinture 46 est soumise à des forces localisées au niveau des quatre bras 42, 43, 44 et 45.

Comme cette ceinture 46 est facilement déformable, ses déformations en quatre lobes créent quatre zones de compression entre la ceinture 46 et la jante rigide 47 qui assurent le calage de la jante rigide 47 sur le croisillon 40.

Dans les zones de compression, des cales repérées en 57, 58, 59, 60 sont enfoncées dans des encoches disposées en vis-à-vis dans la jante rigide 47 et dans la ceinture 46 pour assurer la transmission du couple. Pour constituer le rotor de l'alternateur des pôles tels que 61, 62, 63, 64 sont montés de manière connue sur toute la périphérie de la jante rigide 47.

Comme indiqué précédemment la ceinture peut être constituée de secteurs contigus tels que représentés dans les figures 2 et 3. Dans ces exemples de réalisation la ceinture 3 est rapprochée de l'élément radial 5 en forme de U à l'aide de vis disposées dans le sens axial, comme indiqué dans la figure 7, pour s'engager dans les parties filetées des éléments constituant la ceinture.

Dans le cas de la figure 2, les filets sont taraudés dans le secteur 3 D situé à l'aplomb de l'élément radial 5.

Dans le cas de la figure 3, les filets sont taraudés dans la pièce de recouvrement 6.

## REVENDICATIONS.

1. Procédé de fixation d'une jante rigide (4 ; 47) sur un élément mobile en rotation (R ; 40) présentant un certain nombre d'éléments radiaux (1 ; 5 ; 42, 43, 44, 45) caractérisé en ce qu'il y a interposition entre la jante rigide (4 ; 47) et l'élément mobile en rotation (R ; 40) d'une ceinture déformable (3 ; 46), dimensionnée pour laisser, avant sa fixation, un double jeu radial, de quelques millimètres chacun, avec chaque extrémité libre des éléments radiaux (1 ; 5 ; 42, 43, 44, 45) d'une part et le diamètre intérieur de la jante rigide (4 ; 47) d'autre part et en ce que la ceinture déformable (3 ; 46) subit une déformation en lobes, suite à la mise en traction des éléments radiaux (1 ; 5 ; 42, 43, 44, 45) à l'aide de moyens de fixation solidarisant la ceinture déformable (3 ; 46) à chaque extrémité libre des éléments radiaux (1 ; 5 ; 42, 43, 44, 45), pour créer des zones de compression assurant le calage entre la ceinture déformable (3 ; 46) et la jante rigide (4 ; 47)

2. Procédé de fixation selon la revendication 1 caractérisé en ce que dans les zones de compression, des cales (57, 58, 59, 60) sont insérées dans des encoches disposées en vis-à-vis dans la jante rigide (47) et dans la ceinture souple (46)

3. Dispositif de fixation mettant en oeuvre le procédé décrit dans une des revendications précédentes pour solidariser une jante rigide (4) à une roue de turbine hydraulique (R) constituée de plusieurs pales orientables (1) munie chacune d'un tourillon intérieur (8) mobile en rotation dans un ou plusieurs paliers (11 , 14), d'un moyeu (7) et d'un tourillon extérieur (9) mobile en rotation dans une rotule (29) sur laquelle s'appuie un écrou (27) vissé sur une extrémité filetée (26) du tourillon extérieur (9) caractérisé en ce que la rotule (29) prend appui sur une ceinture déformable (3) dont le moment d'inertie est beaucoup plus petit que celui de la jante rigide (4) et en ce que les dimensions de la tige filetée (26) en bout de chaque pale orientable (1) permet la mise en traction de la pale orientable (1) et la déformation simultanée de la ceinture déformable (3)

4. Dispositif de fixation mettant en oeuvre le procédé décrit dans

15.09/1924.

les revendications 1 et 2 pour solidariser une jante rigide feuilletée (47) à un croisillon de rotor (40) constitué d'un moyeu (41) et de plusieurs bras (42, 43, 44, 45) en forme de U comportant chacun deux méplats parallèles (48, 49) et une entretoise (50) caractérisé en ce que chaque bras (42, 43, 44, 45) est mis sous tension de traction par rapprochement de la ceinture (46), dont le moment d'inertie est beaucoup plus petit que celui de la jante rigide feuilletée (47), et de l'entretoise à l'aide de plusieurs vis (53, 54) passant au travers de l'entretoise (50) et s'engageant dans les filets de la ceinture (46)

5. Dispositif de fixation selon une des revendications précédentes caractérisé en ce que la ceinture (3, 46) est constituée de deux pièces disposées côte à côte sur toute la longueur de la circonférence et maintenues jointives par des moyens de fixation connus

6. Dispositif de fixation selon une des revendications précédentes caractérisé en ce que la ceinture (3, 46) est constituée de plusieurs secteurs contigus (3 G, 3 D) se recouvrant mutuellement au droit de chaque élément radial (5)

7. Dispositif de fixation selon une des revendications précédentes caractérisé en ce que la ceinture (3, 46) est constituée de plusieurs secteurs contigus (3 G, 3 D), doublés au niveau de chaque élément radial (5) d'une pièce de recouvrement (6)

8. Dispositif de fixation selon la revendication 3 caractérisé en ce qu'une portée (22) du tourillon extérieur (9) collabore avec un joint (23) pour assurer l'étanchéité entre la ceinture (3) et le tourillon extérieur (9)

9. Dispositif de fixation selon la revendication 4 caractérisé en ce que les trous (51, 52) de l'entretoise (50) sont oblongs dans le sens circonférentiel.

Fig.1

Fig.2

Fig.3

Fig. 4

Fig. 5

Fig. 6

Fig. 7

# RAPPORT DE RECHERCHE EUROPEENNE

Office européen
des brevets

**0191953**

Numéro de la demande

EP  85 20 0209

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-1 482 706  (MOLINS MACHINE) <br> --- | 1 | B 23 P  11/00 |
| A | FR-A-  650 365 <br> (THOMSON-HOUSTON) <br> ----- | 3,4 | |

**DOMAINES TECHNIQUES RECHERCHES (Int. Cl.4)**

B 23 P
F 16 D

Le présent rapport de recherche a été établi pour toutes les revendications

| Lieu de la recherche | Date d'achèvement de la recherche | Examinateur |
|---|---|---|
| LA HAYE | 20 novembre 1986 | DECLERCK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82